# EUROPEAN PATENT APPLICATION

(11) **EP 3 618 529 A1**
(43) Date of publication of application: **04.03.2020**
(21) Application number: 18790613.6
(22) Date of filing: 13.04.2018
(51) Int. Cl.: H04W 72/04, H04W 16/16, H04W 16/14, H04W 16/10, H04W 16/12, H04W 72/12, H04L 27/26

(54) **UPLINK TRANSMISSION SCHEDULING METHOD, TERMINAL AND BASE STATION**

(30) Priority: 24.04.2017 CN 201710271297
(71) Applicant: China Mobile Communication Co., Ltd Research Institute, Beijing 100053 (CN); China Mobile Communications Group Co., Ltd, Beijing 100032 (CN)
(72) Inventor: ZHOU, Wei, Beijing 100032 (CN); NI, Jiqing, Beijing 100032 (CN); SUN, Qi, Beijing 100032 (CN)
(74) Representative: Hertin und Partner Rechts- und Patentanwälte PartG mbB
(86) International application number: PCT/CN2018/083000
(87) International publication number: WO 2018/196632

(57) **Abstract**

The present disclosure provides an uplink transmission scheduling method, a terminal and a base station. The uplink transmission scheduling method applied to the base station includes: sending configuration information of a sub-band to a terminal, the sub-band being a portion of bandwidth in the system bandwidth; and scheduling the terminal to transmit uplink control information on a full bandwidth uplink control channel or a sub-band uplink control channel. The full bandwidth uplink control channel is an uplink control channel with a bandwidth range less than or equal to the system bandwidth, and the sub-band uplink control channel is an uplink control channel with a bandwidth range less than or equal to a sub-band bandwidth.

## Description

### CROSS-REFERENCE TO RELATED APPLICATION

This application claims the benefit and priority of Chinese Application No. 201710271297.9, filed on April 24, 2017. The whole disclosures of the application are incorporated herein by reference.

### TECHNICAL FIELD

The present disclosure relates to the field of mobile communication technologies, and in particular to an uplink transmission scheduling method, a terminal and a base station

### BACKGROUND

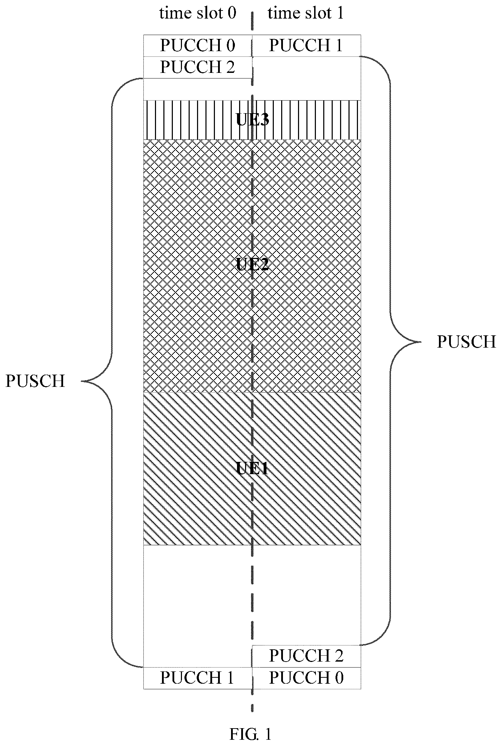

In the Long Term Evolution (LTE) system, Physical uplink control channel (PUCCH) for transmitting uplink control information includes time-frequency resources of one or more Physical Resource Block (PRB) pairs. In the time domain, one PRB pair is in two time slots, and each time slot includes one PRB. In the frequency domain, the PRBs in two time slots are placed in a frequency-hopping manner, and are placed at two ends of the whole system bandwidth, respectively, as shown in Fig. 1. It can be seen that PUCCH and Physical Uplink Shared Channel (PUSCH) are multiplexed in the form of frequency division. When PUCCH adopts the above mapping mode in the frequency domain, on one hand, inter-slot frequency hopping can provide frequency diversity gain; on the other hand, frequency resources of PUSCH will not be scattered by placing the PRBs in two time slots at the two ends of the whole system bandwidth, respectively, thereby ensuring single-carrier characteristics of uplink transmission of the terminal.

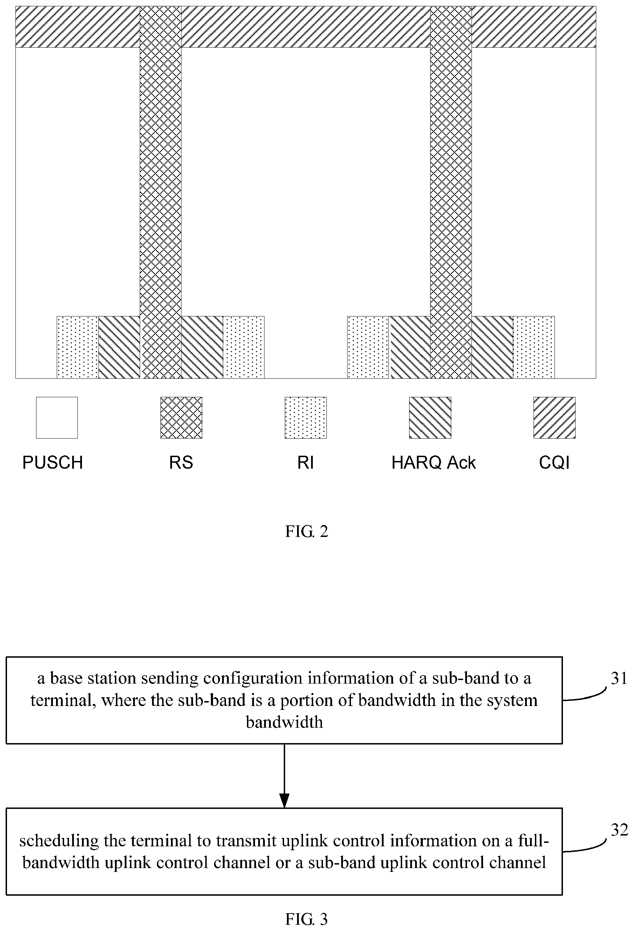

Uplink control information of multiple terminals can be carried simultaneously in one PRB pair resource, and Orthogonal Code division multiplexing is adopted between different terminals in a way that the phase rotation is used in the frequency domain, and Orthogonal Cover Code (OCC) is used in the time domain. When the terminal is required to simultaneously transmit both uplink control information and uplink service data, the control information and the service data can be combined and then transmitted in PUSCH resources, as shown in Fig. 2. When different types of uplink control information (i.e., different PUCCH formats) are transmitted by the terminal, information such as corresponding PRB index, sequence selection and whether to be transmitted together with data, is configured through high-layer signaling such as a system information block 2 (SIB2) and PhysicalConfigDedicated.

In the standardization process of New Radio (NR), the third generation partnership project (3GPP) clearly defines that the new radio will support larger component carrier bandwidth and flexible bandwidth adjustment of the terminal. This means that the terminal can listen, transmit and receives only on a part of the system bandwidth, thereby achieving the purpose of reducing power consumption of the terminal and the cost of the Radio frequency components. As shown in Fig. 1, three user equipment including UE1, UE2 and UE3 can adaptively adjust transmission bandwidth according to bandwidth capability and transmission requirement. In such background, a corresponding implementation mode is required for transmission of uplink control information of the terminal.

### SUMMARY

The present disclosure provides an uplink transmission scheduling method, a terminal and a base station, which can support terminals with different bandwidth capabilities to access systems, and reduce power consumption of the terminal in an uplink control information transmission scheduling process as well as hardware cost of the terminal.

In a first aspect, the present disclosure provides an uplink transmission scheduling method applied to a base station, which includes: sending configuration information of a sub-band to a terminal, the sub-band being a portion of bandwidth in a system bandwidth; and scheduling the terminal to transmit uplink control information on a full-bandwidth uplink control channel or a sub-band uplink control channel. The full-bandwidth uplink control channel is an uplink control channel with a bandwidth range less than or equal to the system bandwidth, and the sub-band uplink control channel is an uplink control channel with a bandwidth range less than or equal to a sub-band bandwidth.

Optionally, in the above method, before sending the configuration information of the sub-band, the method further includes: dividing the system bandwidth into one or more sub-bands and dividing uplink control channels into the full-bandwidth uplink control channel and the sub-band uplink control channel.

Optionally, in the above method, the configuration information of the sub-band includes at least one of the following information: a quantity of sub-bands, indexes of sub-bands, frequency ranges of sub-bands and bandwidth sizes of sub-bands.

Optionally, in the above method, before scheduling the terminal to transmit the uplink control information on the full-bandwidth uplink control channel or the sub-band uplink control channel, the method further includes: receiving bandwidth capability information sent by the terminal, wherein the bandwidth capability information indicates a bandwidth range in which the terminal operates.

Optionally, in the above method, the step of scheduling the terminal to transmit the uplink control information on the full-bandwidth uplink control channel or the sub-band uplink control channel, includes: determining a bandwidth supported by the terminal according to the bandwidth capability information of the terminal; determining a first control channel on which the terminal transmits the uplink control information, according to the bandwidth supported by the terminal; wherein when the terminal supports operation on the whole system bandwidth, the first control channel is the full-bandwidth uplink control channel or the sub-band uplink control channel; when the terminal only supports operation on the sub-band, the first control channel is the sub-band uplink control channel of the corresponding sub-band; and sending to the terminal an uplink scheduling message carrying indication information of the first control channel.

Optionally, in the above method, the step of scheduling the terminal to transmit the uplink control information on the full-bandwidth uplink control channel or the sub-band uplink control channel, includes: determining a first control channel on which the terminal transmits the uplink control information, according to the bandwidth supported by the terminal; wherein when the terminal supports operation on the whole system bandwidth, the first control channel is the full-bandwidth uplink control channel or the sub-band uplink control channel; when the terminal only supports operation on the sub-band, the first control channel is the sub-band uplink control channel of the corresponding sub-band; and, sending to the terminal an uplink scheduling message implicitly indicating the first control channel. The uplink scheduling message implicitly indicating the first control channel means that the uplink scheduling message does not carry indication information of the first control channel and the first control channel is a pre-determined uplink control channel corresponding to the bandwidth supported by the terminal.

In a second aspect, the present disclosure further provides an uplink transmission scheduling method applied to a terminal, including: receiving configuration information of a sub-band sent by a base station, the sub-band being a portion of bandwidth in a system bandwidth; receiving an uplink scheduling message sent by the base station; wherein the uplink scheduling message schedules the terminal to transmit uplink control information on a full-bandwidth uplink control channel or a sub-band uplink control channel, the full-bandwidth uplink control channel is an uplink control channel with a bandwidth range less than or equal to the system bandwidth, and the sub-band uplink control channel is an uplink control channel with a bandwidth range less than or equal to a sub-band bandwidth; and transmitting the uplink control information on a corresponding uplink control channel according to the uplink scheduling message.

Optionally, in the above method, the configuration information of the sub-band includes at least one of the following information: a quantity of sub-bands, indexes of sub-bands, frequency ranges of sub-bands and bandwidth sizes of sub-bands.

Optionally, in the above method, before receiving the uplink scheduling message, the method further includes: sending bandwidth capability information of the terminal to the base station; wherein the bandwidth capability information indicates a bandwidth range in which the terminal operates

Optionally, in the above method, the uplink scheduling message carries indication information of a first control channel for transmitting the uplink control information; the step of transmitting the uplink control information on the corresponding uplink control channel according to the uplink scheduling message, includes: determining the first control channel according to the indication information in the uplink scheduling message; and transmitting the uplink control information through the first control channel.

Optionally, in the above method, the uplink scheduling message does not carry indication information of a first control channel for transmitting the uplink control information; the step of transmitting the uplink control information on the corresponding uplink control channel according to the uplink scheduling message, includes: determining an uplink control channel corresponding to the bandwidth supported by the terminal according to a preset correspondence between the bandwidth supported by the terminal and the uplink control channel; and transmitting the uplink control information through the determined uplink control channel.

In a third aspect, the present disclosure provides a base station, including: a first sending unit, configured to send configuration information of a sub-band to a terminal, the sub-band being a portion of bandwidth in a system bandwidth; and a scheduling unit configured to schedule the terminal to transmit uplink control information on a full-bandwidth uplink control channel or a sub-band uplink control channel. The full-bandwidth uplink control channel is an uplink control channel with a bandwidth range less than or equal to the system bandwidth, the sub-band uplink control channel is an uplink control channel with a bandwidth range less than or equal to a sub-band bandwidth.

Optionally, the above base station further includes: a bandwidth dividing unit configured to, before the first sending unit sends the configuration information of the sub-band, divide the system bandwidth into one or more sub-bands and divide uplink control channels into the full-bandwidth uplink control channel and the sub-band uplink control channel.

Optionally, in the above base station, the configuration information of the sub-band includes at least one of the following information: a quantity of sub-bands, indexes of sub-bands, frequency ranges of sub-bands and bandwidth sizes of sub-bands.

Optionally, the above base station further includes: a receiving unit configured to, before the scheduling unit schedules the terminal to transmit the uplink control information on the full-bandwidth uplink control channel or the sub-band uplink control channel, receive bandwidth capability information sent by the terminal. The bandwidth capability information indicates a bandwidth range in which the terminal operates.

Optionally, in the above base station, the scheduling unit includes: a first determining subunit configured to determine a bandwidth supported by the terminal according to the bandwidth capability information of the terminal; a second determining subunit configured to determine a first control channel on which the terminal transmits the uplink control information, according to the bandwidth supported by the terminal; wherein when the terminal supports operation on the whole system bandwidth, the first control channel is the full-bandwidth uplink control channel or the sub-band uplink control channel; when the terminal only supports operation on the sub-band, the first control channel is the sub-band uplink control channel of the corresponding sub-band; and a second sending sub-unit configured to send to the terminal an uplink scheduling message carrying indication information of the first control channel.

Optionally, in the above base station, the scheduling unit includes: a third determining subunit configured to determine a bandwidth supported by the terminal according to the bandwidth capability information of the terminal; a fourth determining subunit configured to determine a first control channel on which the terminal transmits the uplink control information, according to the bandwidth supported by the terminal; wherein when the terminal supports operation on the whole system bandwidth, the first control channel is the full-bandwidth uplink control channel or the sub-band uplink control channel; when the terminal only supports operation on the sub-band, the first control channel is the sub-band uplink control channel of the corresponding sub-band; and a third sending sub-unit configured to send to the terminal an uplink scheduling message implicitly indicating the first control channel. The uplink scheduling message implicitly indicating the first control channel means that the uplink scheduling message does not carry indication information of the first control channel and the first control channel is a pre-determined uplink control channel corresponding to the bandwidth supported by the terminal.

In a fourth aspect, the present disclosure provides a terminal, including: a first receiving unit, configured to receive configuration information of a sub-band sent by a base station, wherein the sub-band is a portion of bandwidth in a system bandwidth; a second receiving unit, configured to receive an uplink scheduling message which is sent by the base station and schedules the terminal to transmit uplink control information on a full-bandwidth uplink control channel or a sub-band uplink control channel, wherein the full-bandwidth uplink control channel is an uplink control channel with a bandwidth range less than or equal to the system bandwidth, and the sub-band uplink control channel is an uplink control channel with a bandwidth range less than or equal to a sub-band bandwidth; and an uplink sending unit, configured to transmit the uplink control information on a corresponding uplink control channel according to the uplink scheduling message.

Optionally, in the above terminal, the configuration information of the sub-band includes at least one of the following information: a quantity of sub-bands, indexes of sub-bands, frequency ranges of sub-bands and bandwidth sizes of sub-bands.

Optionally, the above terminal further includes: a second sending unit, configured to, before the second receiving unit receives the uplink scheduling message, send bandwidth capability information of the terminal to the base station; wherein the bandwidth capability information indicates a bandwidth range in which the terminal operates.

Optionally, in the above terminal, the uplink scheduling message carries indication information of a first control channel for sending the uplink control information; wherein the uplink sending unit includes: a first determining subunit configured to determine the first control channel according to the indication information in the uplink scheduling message; and a second sending subunit configured to transmit the uplink control information through the first control channel.

Optionally, in the above terminal, the uplink scheduling message does not carry indication information of a first control channel for sending the uplink control information; the uplink sending unit includes: a second determining subunit configured to determine an uplink control channel corresponding to a bandwidth supported by the terminal according to a preset correspondence between the bandwidth supported by the terminal and the uplink control channel; and a third sending subunit configured to transmit the uplink control information through the determined uplink control channel.

In a fifth aspect, the present disclosure provides a base station, including: one or more processors; a memory; and one or more programs. The one or more programs are stored in the memory and configured to be executed by the one or more processors; when the one or more programs are executed by the one or more processors, the processor is configured to implement steps of the uplink transmission scheduling method of the first aspect.

In a sixth aspect, the present disclosure provides a terminal, including: one or more processors; a memory; and one or more programs. The one or more programs are stored in the memory and configured to be executed by the one or more processors when the one or more programs are executed by the one or more processors, the processor is configured to implement steps of the uplink transmission scheduling method of the second aspect.

In a seventh aspect, the present disclosure provides a non-volatile storage medium including a computer program stored on the non-volatile storage medium, wherein when the computer program is executed by a processor, the processor is configured to implement steps of the uplink transmission scheduling method of the first aspect.

In an eighth seventh aspect, the present disclosure provides a non-volatile storage medium including a computer program stored on the non-volatile storage medium, wherein when the computer program is executed by a processor, the processor is configured to implement steps of the uplink transmission scheduling method of the second aspect.

Compared with the related art, the uplink transmission scheduling method, the terminal and the base station provided in the present disclosure have at least the following beneficial effects: the system bandwidth is divided into a plurality of sub-bands, uplink control channels of different types in different sub-bands are scheduled according to the capability of the terminal and the allocated service data resources. Thus, the present disclosure can support the terminals with different bandwidth capabilities to access systems, and does not require the terminal to have the capability of operating on the full bandwidth, thereby reducing power consumption of the terminal in the uplink control information transmission scheduling process as well as hardware cost of the terminal. In addition, the present disclosure can be compatible with the uplink control channel design in the related LTE system, and the time-frequency resource mapping mode of the sub-band control channel and the full-bandwidth control channel is consistent with the uplink control channel mapping mode in the LTE system. In addition, the present disclosure can well support the characteristics of large bandwidth and flexible transmission bandwidth in the new radio.

### BRIEF DESCRIPTION OF THE DRAWINGS

In order to illustrate technical solutions of the present disclosure, drawings to be used in the description of the present disclosure will be described briefly hereinafter. Apparently, the drawings described hereinafter are only some embodiments of the present disclosure, and other drawings may be obtained by those skilled in the art according to those drawings without creative work.
Fig. 1 is a schematic diagram of an LTE control channel and flexible bandwidths of different terminals in related art;
Fig. 2 is a schematic diagram of simultaneous transmission of control information and service data in a PUSCH in related art;
Fig. 3 is a flow chart of an uplink transmission scheduling method applied to a base station according to the present disclosure;
Fig. 4 is an exemplary diagram of sub-band division according to the present disclosure;
Fig. 5 is a flow chart of an uplink transmission scheduling method applied to a base station according to the present disclosure;
Fig. 6 is a flow chart of an uplink transmission scheduling method applied to a terminal according to the present disclosure;
Fig. 7 is a schematic structural diagram of a base station according to the present disclosure;
Fig. 8 is a schematic structural diagram of a base station according to the present disclosure;
Fig. 9 is a schematic structural diagram of a terminal according to the present disclosure; and
Fig. 10 is a schematic structural diagram of a terminal according to the present disclosure.

### DETAILED DESCRIPTION

In order to make the technical problems to be solved, the technical solutions and the advantages of the present disclosure more apparent, the present disclosure will be described hereinafter in a clear and complete manner in conjunction with the drawings and embodiments. In the following description, specific details such as specific configurations and components are provided merely to aid in a thorough understanding of embodiments of the present disclosure. Accordingly, it will be apparent to those skilled in the art that various changes and modifications may be made to the embodiments described herein without departing from the scope and spirit of the present disclosure. In addition, description of known functions and configurations is omitted for clarity and brevity.

It should be understood that, "an embodiment" or "one embodiment" mentioned throughout the specification means as follows. A specific feature, structure or characteristic related with an embodiment is included by at least one embodiment in the present disclosure. Thus, "in an embodiment" or "in one embodiment" occurred throughout the whole specification does not necessarily refer to the same embodiment. In addition, these specific features, structures or characteristics may be combined in one or more embodiments in any suitable manner.

In various embodiments of the present disclosure, it should be understood that, sequence of numbers of following processes does not mean the execution order. The execution order of each process should be determined by functions and internal logics thereof, which should not make any limitation on the implementation process of the embodiments in the application. In addition, the terms "system" and "network" in the application are usually exchanged for use.

In the present disclosure, the form of the base station is unlimited. The base station may be a Macro Base station, a Pico Base Station, a Node B (name of 3G mobile base station), an enhanced Node B (eNB), a Femto eNB, or a Home eNode B, or a Home eNB, or HeNB, a relay station, an Access Point (AP), a Remote Radio Unit (RRU), a Remote Radio Head (RRH), a network side node in the fifth generation (5G) mobile communication system, such as a central unit (CU) and a distributed unit (DU). The terminal may be a mobile phone (or cell phone), or another device capable of transmitting and receiving wireless signals, including a User Equipment (UE), a Personal Digital Assistant (PDA), a wireless modem, a wireless communication device, a handheld device, a laptop computer, a cordless phone, a Wireless Local Loop (WLL) station, a Customer Premise Equipment (CPE) capable of converting a mobile signal into a WiFi signal, or a mobile intelligent hot spot, an intelligent home appliance, or a device capable of initiatively communicating with a mobile communication network without a human operation, and so on.

In related long term evolution (LTE) communication system, uplink control information is sent at two ends of the whole system bandwidth, thus the terminal is required to have the capability of operating on the full bandwidth. While in the new radio, if adopting an uplink control information transmission mechanism which is the same as the LTE, the power consumption and the hardware cost of the terminal can be greatly increased due to increasing of carrier unit bandwidth. Further, the transmission of the uplink control information cannot be realized for some terminals with limited bandwidth.

It can be seen that when the terminal supports different bandwidth capabilities, if the transmission of uplink control information is scheduled by adopting a mechanism similar to LTE, the terminal is still required to have the capability of operating on the full bandwidth. When a flexible scheduling mechanism is adopted, i.e., scheduling uplink control information of different terminals on different time-frequency resources for transmission, the complexity of system design and the overhead of control signaling are greatly increased. Further, for a single terminal's control channel, when a centralized scheduling is adopted on the frequency domain, frequency diversity gain can be lost.

The present disclosure provides an uplink transmission scheduling method, which supports terminals with different bandwidth capabilities to access systems and reduces power consumption of the terminal in an uplink control information transmission scheduling process as well as hardware cost of the terminal. Referring to Fig. 3, an uplink transmission scheduling method according to the present disclosure includes steps 31-32 when being applied to a base station

Step 31: a base station sending configuration information of a sub-band to a terminal, where the sub-band is a portion of bandwidth in the system bandwidth.

Here, the base station may divide the whole system bandwidth in advance into one or more sub-bands. Specifically, the whole system bandwidth may be divided into a plurality of sub-bands, and these sub-bands contain all bandwidth resources of the system bandwidth. Alternatively, sub-band division may be performed in only some bandwidth resources of the system bandwidth to form one or more sub-bands. In addition, considering that the terminals may support different working bandwidths, a size of a sub-band bandwidth may be determined in advance according to all working bandwidths supported by the terminals. In order to ensure that the working bandwidth of each terminal can correspond to at least one sub-band, in the present disclosure, the sub-band bandwidth is not larger than the minimum working bandwidth; the bandwidth sizes of different sub-bands may be the same or different.

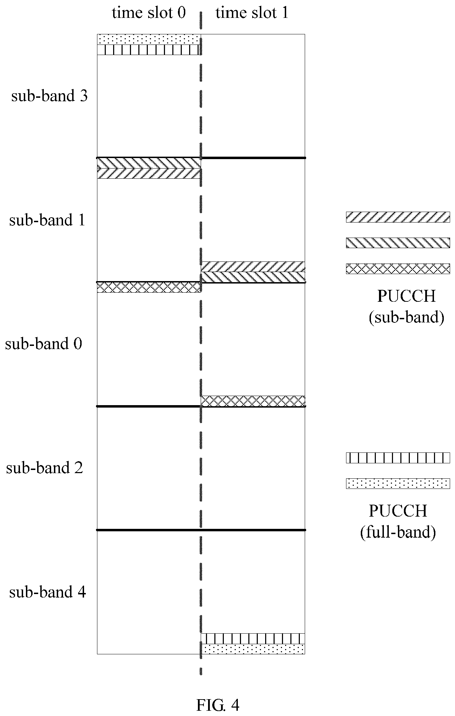

In the present disclosure, after division of the sub-bands, uplink control channels are divided into a full-bandwidth uplink control channel and a sub-band uplink control channel. Here, the full-bandwidth uplink control channel is an uplink control channel with a bandwidth range less than or equal to the system bandwidth; and the sub-band uplink control channel is an uplink control channel with a bandwidth range less than or equal to the sub-band bandwidth. As an implementation mode, the full-bandwidth uplink control channel may be located at two ends of the system bandwidth (i.e., high and low ends of the system bandwidth, head and tail positions of the bandwidth). Optionally, the full-bandwidth uplink control channel may also be located on different time slots, so that the full-bandwidth uplink control channel is compatible with the relevant LTE system. The sub-band uplink control channel may be located at two ends of the corresponding sub-band (i.e., head and tail positions of the bandwidth). Optionally, the sub-band uplink control channel may also be located on different time slots, so that inter-slot frequency hopping can provide frequency diversity gain on one hand, and on the other hand, frequency resources of PUSCH of the sub-band will not be scattered by placing the sub-band uplink control channel at the two ends of the sub-band bandwidth. Fig. 4 shows an example of sub-band division of the present disclosure. The system bandwidth may be divided into 5 sub-bands including sub-band 0-sub-band 4. The full-bandwidth uplink control channels are located at the two ends of the system bandwidth; the sub-band uplink control channels are located at the two ends of the sub-band.

After division of the sub-bands, one or more sub-bands can be obtained, and configuration information of the sub-bands is obtained. The configuration information of the sub-bands includes at least one of the following information: a quantity of the sub-bands, indexes of the sub-bands, frequency ranges of the sub-bands and bandwidth sizes. For example, the size of the sub-band may be predetermined by the base station and the terminal, and then the bandwidth size of the sub-band may not be sent when the configuration information of the sub-band is sent.

In step 31, the base station is required to send the configuration information of the sub-bands to the terminal, and specifically, the base station may send the configuration information of the sub-bands to the terminal via radio resource control (RRC) signaling. In addition, in the present disclosure, the configuration information of the sub-bands may also be updated, that is, the base station may re-divide the sub-bands to obtain new sub-band configuration information. Generally, an updating period of the sub-band configuration information is greater than a scheduling period of a physical layer, and thus, in the step 31 of the present disclosure, the configuration information of the sub-bands may be sent to the terminal by means of system information block (SIB) information.

Step 32: scheduling the terminal to transmit uplink control information on a full-bandwidth uplink control channel or a sub-band uplink control channel, where the full-bandwidth uplink control channel is an uplink control channel with a bandwidth range less than or equal to the system bandwidth, and the sub-band uplink control channel is an uplink control channel with a bandwidth range less than or equal to the sub-band bandwidth.

Here, when it is required to schedule the terminal to transmit the uplink control information, the base station may send an uplink scheduling message, thereby scheduling the terminal to transmit the uplink control information on the full-bandwidth uplink control channel or the sub-band uplink control channel. Since the terminals may support operating on some sub-bands or the whole system bandwidth, in step 32, according to the bandwidth supported by the terminal, the base station may determine a first control channel on which the terminal transmits the uplink control information. When the terminal supports operation on the whole system bandwidth, the first control channel is the full-bandwidth uplink control channel or the sub-band uplink control channel. When the terminal only supports the operation on the sub-band, the first control channel is a sub-band uplink control channel of the corresponding sub-band.

Here, when the terminal supports operation on the whole system bandwidth, or only supports operation on the portion of the system bandwidth, one sub-band may be optionally selected from the sub-bands supported by the terminal, or one sub-band which meets a preset condition may be selected from the sub-bands, and an uplink control channel on the selected sub-band may be taken as the first control channel. The preset condition may include a sub-band with the largest index, a sub-band with the smallest index, a sub-band where a center frequency of the working bandwidth of the terminal is located, and a sub-band where service data resources allocated for the terminal are located, and the like

After the first control channel is determined, in the step 32 of the present disclosure, explicit scheduling or implicit scheduling may be employed to notify the terminal to transmit the uplink control information on the first control channel.

When explicit scheduling is adopted, the base station may send an uplink scheduling message carrying indication information of the first control channel to the terminal. The indication information of the first control channel is used for indicating that the terminal transmits the uplink control information on the full-bandwidth uplink control channel or the sub-band uplink control channel. The uplink scheduling message may carry indication information of corresponding sub-band such as a sub-band index when the uplink control information is transmitted on the sub-band uplink control channel, and may also carry other relevant configuration information. For example, when the first control channel is a sub-band uplink control channel, the uplink scheduling message may carry a sub-band index of a sub-band corresponding to the first control channel; when the first control channel is a full-bandwidth uplink control channel, the uplink scheduling message may carry a frequency range and a bandwidth size of the first control channel. Here, the base station may also send the indication information of the first control channel to the terminal through UE-specific high-layer signaling.

When implicit scheduling is adopted, the base station may send to the terminal an uplink scheduling message which implicitly indicates the first control channel. The implicit indication means that the uplink scheduling message does not carry indication information of the first control channel and the first control channel is a pre-determined uplink control channel corresponding to the bandwidth supported by the terminal. Specifically, the pre-determination means that locations of first control channels are pre-determined for different working bandwidths of the terminals. For example, when one terminal only supports operation on some sub-bands, the sub-band which meets a preset condition and is one of the sub-bands supported by the terminal, may be pre-determined as the sub-band where the first control channel is located. The preset condition may include: a sub-band with the largest index, a sub-band with the smallest index, a sub-band where a center frequency of the working bandwidth of the terminal is located, and the like. For another example, when one terminal supports operation on the whole system bandwidth, the sub-band where the center frequency of the working bandwidth of the terminal is located, may be pre-determined as the sub-band where the first control channel is located. Though the pre-determination between the base station and the terminal side in advance, when performing scheduling in the step 32, the base station may not need to send the indication information of the first control channel; after receiving the uplink scheduling message, the terminal can determine the location of the first control channel based on the pre-determination and the working bandwidth supported by the terminal, so as to transmit the uplink control information.

In addition, when the terminal supports operation on multiple sub-bands, the base station in the present disclosure may further adjust the sub-band where the first control channel is located. The base station may send to the terminal, downlink control information for indicating adjustment of the sub-band where the first control channel is located. Then, transmission of the uplink control information is switched to other sub-band of the multiple sub-bands.

Through the above steps, the present disclosure realizes scheduling process of uplink control information. It can be seen that the above method of the present disclosure can support terminals with different bandwidth capabilities to access systems, and does not require the terminal to have the capability of operating on the full bandwidth, thereby reducing power consumption of the terminal in the uplink control information transmission scheduling process as well as hardware cost of the terminal.

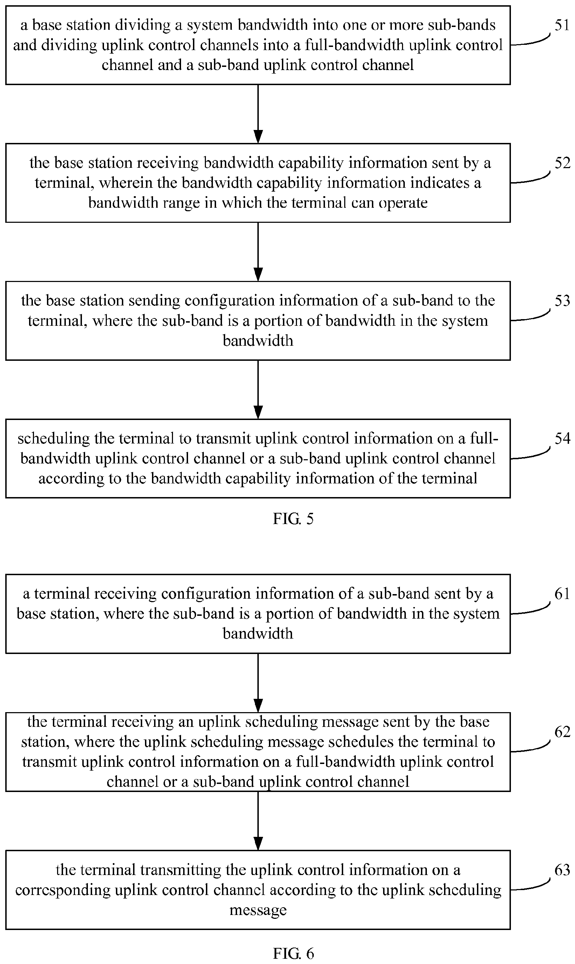

Referring to Fig. 5, the present disclosure provides another uplink transmission scheduling method that includes steps 51-54 when applied to a base station.

Step 51: the base station dividing a system bandwidth into one or more sub-bands and dividing uplink control channels into a full-bandwidth uplink control channel and a sub-band uplink control channel.

The base station may divide the whole system bandwidth into one or more sub-bands. Specifically, the whole system bandwidth may be divided into a plurality of sub-bands, and these sub-bands contain all bandwidth resources of the system bandwidth. Alternatively, sub-band division may be performed in only some bandwidth resources of the system bandwidth to form one or more sub-bands. In addition, considering that the terminals may support different working bandwidths, a size of a sub-band bandwidth may be determined in advance according to all working bandwidths supported by the terminals. In order to ensure that the working bandwidth of each terminal can correspond to at least one sub-band, in the present disclosure, the sub-band bandwidth is not larger than the minimum working bandwidth; the bandwidth sizes of different sub-bands may be the same or different.

After division of the sub-bands, the uplink control channels are divided into a full-bandwidth uplink control channel and a sub-band uplink control channel. Here, the full-bandwidth uplink control channel is an uplink control channel with a bandwidth range less than or equal to the system bandwidth; and the sub-band uplink control channel is an uplink control channel with a bandwidth range less than or equal to the sub-band bandwidth. As an implementation mode, the full-bandwidth uplink control channel may be located at two ends of the system bandwidth (i.e., head and tail positions of the bandwidth). Optionally, the full-bandwidth uplink control channel may also be located on different time slots, so that the full-bandwidth uplink control channel is compatible with the relevant LTE system. The sub-band uplink control channel may be located at two ends of the corresponding sub-band (i.e., head and tail positions of the bandwidth). Optionally, the sub-band uplink control channel may also be located on different time slots, so that inter-slot frequency hopping can provide frequency diversity gain on one hand, and on the other hand, frequency resources of PUSCH of the sub-band will not be scattered by placing the sub-band uplink control channel at the two ends of the sub-band bandwidth.

After division of the sub-bands, one or more sub-bands can be obtained, and configuration information of the sub-bands is obtained. The configuration information of the sub-bands includes at least one of the following information: a quantity of the sub-bands, indexes of the sub-bands, frequency ranges of the sub-bands and bandwidth sizes.

Step 52: the base station receiving bandwidth capability information sent by the terminal, wherein the bandwidth capability information indicates a bandwidth range in which the terminal can operate.

Here, the terminal can send the bandwidth capability information of the terminal itself to the base station, after completing an uplink and downlink synchronization process with the base station and entering an RRC connection state, thereby notifying the base station of the bandwidth range supported by the terminal itself.

Step 53: the base station sending configuration information of a sub-band to the terminal, where the sub-band is a portion of bandwidth in the system bandwidth.

Here, the base station may send to the terminal a result of division of the sub-bands, i.e., the configuration information of the sub-bands. Specifically, the configuration information of the sub-bands includes at least one of the following information: a quantity of the sub-bands, indexes of the sub-bands, frequency ranges of the sub-bands and bandwidth sizes. For example, the size of the sub-band may be predetermined by the base station and the terminal, and then the bandwidth size of the sub-band may not be sent when the configuration information of the sub-band is sent.

Step 54: scheduling the terminal to transmit uplink control information on a full-bandwidth uplink control channel or a sub-band uplink control channel according to the bandwidth capability information of the terminal, where the full-bandwidth uplink control channel is an uplink control channel with a bandwidth range less than or equal to the system bandwidth, and the sub-band uplink control channel is an uplink control channel with a bandwidth range less than or equal to a sub-band bandwidth.

Here, the base station schedules the terminal to transmit the uplink control information on the uplink control channel in the sub-band or the system bandwidth supported by the terminal.

For example, when the terminal supports operation on the whole system bandwidth, the base station may schedule the terminal to transmit the uplink control information on the full-bandwidth uplink control channel, and may also schedule the terminal to transmit the uplink control information on the sub-band uplink control channel of any sub-band. When the terminal only supports operation on some sub-bands, the base station may schedule the terminal to transmit the uplink control information on the sub-band uplink control channel of the sub-band supported by the terminal. Specifically, the selection mode and the indication mode of the uplink control channel may be referred to the preceding description in the step 32, which will not be elaborated herein.

Through the above steps of the present disclosure, the system bandwidth is divided into sub-bands, and the uplink control information is scheduled according to the bandwidth capability of the terminal. It can be seen that in the method of the present disclosure, the system bandwidth is divided into a plurality of sub-bands, uplink control channels of different types in different sub-bands are scheduled according to the capability of the terminal and the allocated service data resources. Thus, the method can support the terminals with different bandwidth capabilities to access systems, and does not require the terminal to have the capability of operating on the full bandwidth, thereby reducing power consumption of the terminal in the uplink control information transmission scheduling process as well as hardware cost of the terminal. In addition, the present disclosure can be compatible with the uplink control channel design in the related LTE system, and the time-frequency resource mapping mode of the sub-band control channel and the full-bandwidth control channel is consistent with the uplink control channel mapping mode in the LTE system. In addition, the method can well support the characteristics of large bandwidth and flexible transmission bandwidth in the new radio.

The uplink transmission scheduling method of the present disclosure is described above from the base station side, and then the uplink transmission scheduling method of the present disclosure is further described from a terminal side.

Referring to Fig. 6, the uplink transmission scheduling method of the present disclosure includes steps 61-63 when applied to a terminal.

Step 61: the terminal receiving configuration information of a sub-band sent by a base station, where the sub-band is a portion of bandwidth in the system bandwidth.

Here, the sub-band is a portion of bandwidth, which is divided from the system bandwidth by the base station. The configuration information of the sub-bands may include at least one of the following information: a quantity of the sub-bands, indexes of the sub-bands, frequency ranges of the sub-bands and bandwidth sizes.

Step 62: the terminal receiving an uplink scheduling message sent by the base station, where the uplink scheduling message schedules the terminal to transmit uplink control information on a full-bandwidth uplink control channel or a sub-band uplink control channel, the full-bandwidth uplink control channel is an uplink control channel with a bandwidth range less than or equal to the system bandwidth, and the sub-band uplink control channel is an uplink control channel with a bandwidth range less than or equal to a sub-band bandwidth.

Here, the base station schedules the terminal to transmit the uplink control information on the full-bandwidth uplink control channel or the sub-band uplink control channel according to the bandwidth capability of the terminal. As an implementation mode, the full-bandwidth uplink control channel may be located at two ends of the system bandwidth, and the sub-band uplink control channel may be located at two ends of the corresponding sub-band.

Step 63: the terminal transmitting the uplink control information on a corresponding uplink control channel according to the uplink scheduling message.

Here, the base station may perform the scheduling in an explicit manner. At this point, the uplink scheduling message carries indication information of a first control channel used for transmitting the uplink control information. The terminal can determine the first control channel according to the indication information in the uplink control message, and transmit the uplink control information through the first control channel.

The base station may also perform the scheduling in an implicit manner. At this point, the uplink scheduling message does not carry indication information of a first control channel used for transmitting the uplink control information. According to a preset correspondence between a bandwidth supported by the terminal and an uplink control channel, the terminal can determine an uplink control channel corresponding to the bandwidth supported by the terminal, and transmits the uplink control information through the determined uplink control channel.

In the above method, in order to enable the base station to obtain the working bandwidth supported by the terminal, the terminal may send the bandwidth capability information of the terminal itself to the base station. The bandwidth capability information indicates the bandwidth range in which the terminal can operate. Specifically, the terminal can send the bandwidth capability information of the terminal itself to the base station, after completing an uplink and downlink synchronization process with the base station and entering an RRC connection state, thereby notifying the base station of the bandwidth range supported by the terminal itself.

Through the above steps of the present disclosure, a scheduling process of the uplink control information transmission of the terminal is implemented, and the uplink control channels of different types in different sub-bands can be scheduled according to the capability of the terminal and the allocated service data resource. Thus, the method can support the terminals with different bandwidth capabilities to access systems, and does not require the terminal to have the capability of operating on the full bandwidth, thereby reducing power consumption of the terminal in the uplink control information transmission scheduling process as well as hardware cost of the terminal.

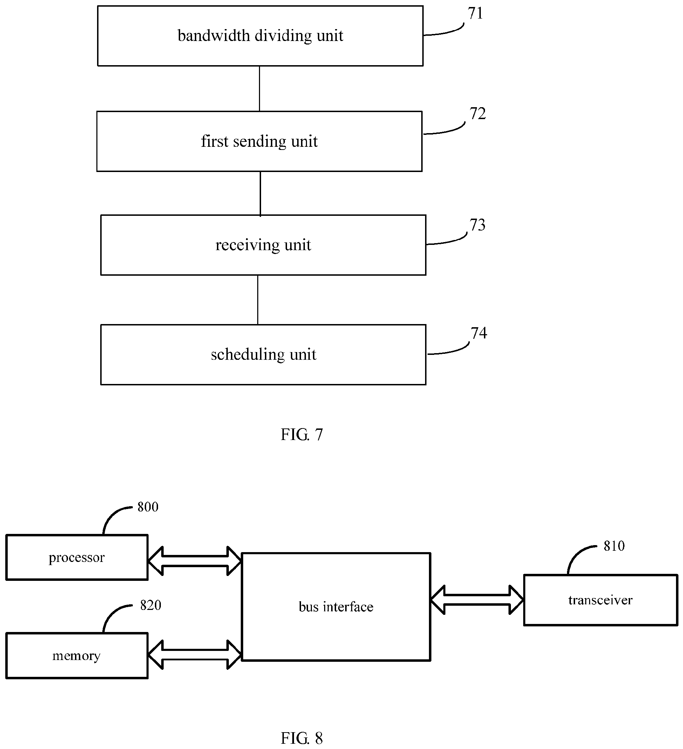

Based on the above methods, the present disclosure provides a base station. As shown in Fig. 7, the base station includes: a first sending unit 72 configured to send configuration information of a sub-band to a terminal, where the sub-band is a portion of bandwidth in the system bandwidth; and a scheduling unit 74, configured to schedule the terminal to transmit uplink control information on a full-bandwidth uplink control channel or a sub-band uplink control channel.

The full-bandwidth uplink control channel is an uplink control channel with a bandwidth range less than or equal to the system bandwidth. The sub-band uplink control channel is an uplink control channel with a bandwidth range less than or equal to a sub-band bandwidth.

As an implementation mode, the base station further includes a bandwidth dividing unit 71 configured to, divide the system bandwidth into one or more sub-bands before the first sending unit sends the configuration information of the sub-band, and divide uplink control channels into a full-bandwidth uplink control channel and a sub-band uplink control channel. The full-band uplink control channel is located at two ends of the system bandwidth; the sub-band uplink control channel is located at two ends of the corresponding sub-band.

As an implementation mode, in the base station, the configuration information of the sub-band includes at least one of the following information: a quantity of the sub-bands, indexes of the sub-bands, frequency ranges of the sub-bands and bandwidth sizes of the sub-bands.

As an implementation mode, the base station further includes a receiving unit 73, configured to receive bandwidth capability information sent by the terminal, before the scheduling unit schedules the terminal to transmit the uplink control information on the full-bandwidth uplink control channel or the sub-band uplink control channel. The bandwidth capability information indicates the bandwidth range in which the terminal can operate.

As an implementation mode, in the base station, the scheduling unit 74 includes: a first determining subunit, a second determining subunit and a second sending sub-unit. The first determining subunit is configured to determine a bandwidth supported by the terminal according to the bandwidth capability information of the terminal. The second determining subunit is configured to determine a first control channel on which the terminal transmits the uplink control information, according to the bandwidth supported by the terminal. When the terminal supports operation on the whole system bandwidth, the first control channel is a full-bandwidth uplink control channel or a sub-band uplink control channel. When the terminal only supports operation on the sub-band, the first control channel is a sub-band uplink control channel of the corresponding sub-band. The second sending sub-unit is configured to send to the terminal an uplink scheduling message carrying indication information of the first control channel.

As an implementation mode, in the base station, the scheduling unit 74 includes a third determining subunit and a fourth determining subunit. The third determining subunit is configured to determine the bandwidth supported by the terminal according to the bandwidth capability information of the terminal. The fourth determining subunit is configured to determine a first control channel on which the terminal transmits the uplink control information, according to the bandwidth supported by the terminal. When the terminal supports operation on the whole system bandwidth, the first control channel is a full-bandwidth uplink control channel or a sub-band uplink control channel. When the terminal only supports operation on the sub-band, the first control channel is a sub-band uplink control channel of the corresponding sub-band. The third sending sub-unit is configured to send to the terminal an uplink scheduling message which implicitly indicates the first control channel. The implicit indication means that the uplink scheduling message does not carry indication information of the first control channel and the first control channel is a pre-determined uplink control channel corresponding to the bandwidth supported by the terminal.

In order to better achieve the above purpose, as shown in Fig. 8, the present disclosure further provides a base station. The base station includes a processor 800, a memory 820 coupled with the processor 800 through a bus interface, and a transceiver 810 coupled with the processor 800 through the bus interface. The memory 820 is configured to store programs and data used by the processor when executing the operation. The transceiver 810 is configured to receive and transmit data, pilot frequency and control information under the control of the processor 800. When the processor 800 calls and executes the programs and data stored in the memory 820, the processor 800 controls the base station to execute functions.

Specifically, the processor 800 is configured to read the program in the memory 820, and is specifically configured to perform the following functions: the base station sending configuration information of a sub-band to a terminal, where the sub-band is a portion of bandwidth in the system bandwidth; and schedule the terminal to transmit uplink control information on a full-bandwidth uplink control channel or a sub-band uplink control channel. The full-bandwidth uplink control channel is an uplink control channel with a bandwidth range less than or equal to the system bandwidth. The sub-band uplink control channel is an uplink control channel with a bandwidth range less than or equal to a sub-band bandwidth.

In Fig. 8, the bus architecture may include any number of interconnected buses and bridges. Specifically, one or more processors demonstrated with processor 800 are coupled with various circuits of memory, which is demonstrated with the memory 820. The bus architecture may also link various other circuits, such as, peripherals, voltage regulators, and power management circuits, as is known in the art. Thus, in the application, no further description is provided. The bus interface provides an interface. The transceiver 810 may be composed of multiple components, that is, including a transmitter and a receiver, which provide a unit for communicating with various other devices via the transmitting medium. The processor 800 is in charge of managing bus architecture and general processing. The memory 820 may store data used when the processor 800 performs operations.

Specifically, the processor 800 is further configured to divide the system bandwidth into one or more sub-bands, and divide uplink control channels into a full-bandwidth uplink control channel and a sub-band uplink control channel.

The configuration information of the sub-band includes at least one of the following information: a quantity of the sub-bands, indexes of the sub-bands, frequency ranges of the sub-bands and bandwidth sizes.

Specifically, the processor 800 is further configured to receive bandwidth capability information sent by the terminal. The bandwidth capability information indicates a bandwidth range in which the terminal can operate.

Specifically, the processor 800 is further configured to: determine the bandwidth supported by the terminal according to the bandwidth capability information of the terminal; according to the bandwidth supported by the terminal, determining a first control channel on which the terminal transmits the uplink control information; and, send to the terminal an uplink scheduling message carrying indication information of the first control channel. When the terminal supports operation on the whole system bandwidth, the first control channel is a full-bandwidth uplink control channel or a sub-band uplink control channel. When the terminal only supports operation on the sub-band, the first control channel is a sub-band uplink control channel of the corresponding sub-band.

Specifically, the processor 800 is further configured to: determine the bandwidth supported by the terminal according to the bandwidth capability information of the terminal; according to the bandwidth supported by the terminal, determine a first control channel on which the terminal sends the uplink control information; and, send to the terminal an uplink scheduling message which implicitly indicates the first control channel. When the terminal supports operation on the whole system bandwidth, the first control channel is a full-bandwidth uplink control channel or a sub-band uplink control channel. When the terminal only supports operation on the sub-band, the first control channel is a sub-band uplink control channel of the corresponding sub-band. The implicit indication means that the uplink scheduling message does not carry indication information of the first control channel and the first control channel is a pre-determined uplink control channel corresponding to the bandwidth supported by the terminal.

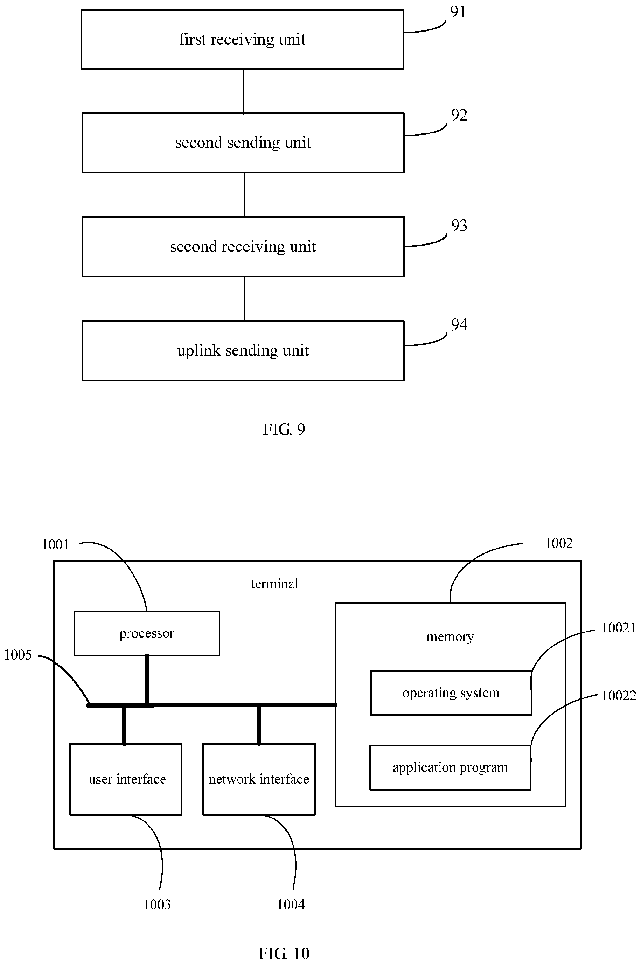

Referring to Fig. 9, the present disclosure further provides a terminal. As shown in Fig. 9, the terminal includes: a first receiving unit 91, a second receiving unit 93 and an uplink sending unit 94. The first receiving unit 91 is configured to receive configuration information of a sub-band sent by a base station, where the sub-band is a portion of bandwidth in the system bandwidth. The second receiving unit 93 is configured to receive an uplink scheduling message which is sent by the base station. The uplink scheduling message schedules the terminal to transmit uplink control information on a full-bandwidth uplink control channel or a sub-band uplink control channel. The full-bandwidth uplink control channel is an uplink control channel with a bandwidth range less than or equal to the system bandwidth, and the sub-band uplink control channel is an uplink control channel with a bandwidth range less than or equal to a sub-band bandwidth. The uplink sending unit 94 is configured to send the uplink control information on a corresponding uplink control channel according to the uplink scheduling message.

The configuration information of the sub-band includes at least one of the following information: a quantity of sub-bands, indexes of sub-band, frequency ranges of sub-bands and bandwidth sizes.

As an implementation mode, the terminal further includes a second sending unit 92, which is configured to, before the second receiving unit receives the uplink scheduling message, send bandwidth capability information of the terminal to the base station. The bandwidth capability information indicates the bandwidth range in which the terminal can operate.

As an implementation mode, the uplink scheduling message carries indication information of a first control channel used for sending the uplink control information. The uplink sending unit includes: a first determination subunit configured to determine the first control channel according to the indication information in the uplink scheduling message; and a second sending subunit configured to send the uplink control information through the first control channel.

As an implementation manner, the uplink scheduling message does not carry indication information of a first control channel used for sending the uplink control information; the uplink sending unit 94 includes: a second determination subunit configured to determine an uplink control channel corresponding to the bandwidth supported by the terminal according to a preset correspondence between a bandwidth supported by the terminal and an uplink control channel; and a third sending subunit configured to send the uplink control information through the determined uplink control channel.

Refer to Fig. 10, Fig. 10 is a structural diagram of a terminal provided by the present disclosure. As shown in Fig. 10, the terminal includes: at least one processor 1001, a memory 1002, at least one network interface 1004 and a user interface 1003. Various components of the terminal are coupled together through a bus system 1005. It should be understood that the bus system 1005 is used to realize connection communication between the components. The bus system 1005 includes a power bus, a control bus and a state signal bus in addition to a data bus. However, for clarity, various bus in Fig. 10 are designated as the bus system 1005.

The user interface 1003 may include a display, a keyboard or a click device (i.e., a mouse, a track ball), a touch panel or a touch screen, etc.

It should be understood that the memory 1002 in the present disclosure may be a volatile memory or nonvolatile memory, or may include both volatile memory and nonvolatile memory. The non-volatile memory may be a read-only memory (ROM), a programmable ROM (PROM), an erasable PROM (EPROM), an Electrically EPROM (EEPROM) or a flash memory. The volatile memory may be a random access memory (RAM), which acts as an external cache. By way of example and not limitation, many forms of RAMs are available, such as static RAM (SRAM), a dynamic RAM (DRAM), a synchronous DRAM (SDRAM), a double data rate SDRAM (DDRSDRAM), an enhanced SDRAM (ESDRAM), a Synch link DRAM (SLDRAM), and a direct rambus RAM (DRRAM). The memory 1002 of the systems and methods described herein is intended to include, but is not limited to, these and any other suitable types of memory.

In some embodiments, the memory 1002 stores the following elements, such as executable modules, data structures, or a subset thereof, or an extension set thereof: an operating system 10021 and an application program 10022.

The operating system 10021 includes various system programs, such as a framework layer, a core library layer, a driving layer, and is used for achieving various basic services and processing hardware-based tasks. The application program 10022 includes various applications, such as a media player and a browser, and is used for realizing various application services. The program of the method of the present disclosure may be included in the application program 10022.

In the present disclosure, by calling the programs or instructions stored in the memory 1002, such as the programs or instructions stored in the application program 10022, the processor 1001 is configured to: receive configuration information of a sub-band sent by the base station, where the sub-band is a portion of bandwidth in the system bandwidth; receive an uplink scheduling message sent by the base station; and send the uplink control information on a corresponding uplink control channel according to the uplink scheduling message. The uplink scheduling message schedules the terminal to transmit uplink control information on a full-bandwidth uplink control channel or a sub-band uplink control channel. The full-bandwidth uplink control channel is an uplink control channel with a bandwidth range less than or equal to the system bandwidth. The sub-band uplink control channel is an uplink control channel with a bandwidth range less than or equal to the bandwidth of the sub-band.

Optionally, the uplink scheduling message carries indication information of a first control channel used for sending the uplink control information; the processor 1001 is further configured to: determine the first control channel according to the indication information in the uplink scheduling message; and transmit the uplink control information through the first control channel.

Optionally, the uplink scheduling message does not carry indication information of a first control channel used for sending the uplink control information; the processor 1001 is further configured to, determine an uplink control channel corresponding to the bandwidth supported by the terminal according to a preset correspondence between the bandwidth supported by the terminal and the uplink control channel, and transmit the uplink control information through the determined uplink control channel.

The present disclosure also provides a non-volatile computer readable storage medium having a computer program stored thereon. When the computer program is executed by a processor, the steps in the uplink transmission scheduling method in any one of the method embodiments are implemented.

One of ordinary skill in the art may learn that, taking into account various embodiments of the present disclosure, units and algorithm blocks described in each example may be implemented by electronic hardware, or in a combination of computer software and electronic hardware. Whether these functions are implemented by using hardware or software depends on specific application, and design constraints of the technical solution. A skilled person may adopt different methods to implement described functions of each specific application, but such implementation should not be considered to extend beyond the scope of the present disclosure.

One of ordinary skill in the art may clearly understand that, for convenient and concise of the description, specific work process of foregoing system, device and unit may refer to a corresponding process in method embodiments, which are not repeated here.

In the embodiments of the application, it should be understood that, the disclosed device and method may be implemented by using other methods. For example, device embodiments described above are only illustrative, e.g., division of the unit is only a logical division, there may be additional division methods during actual implementation. For example, multiple units or components may be combined, or integrated into another system. Alternatively, some features may be omitted, or not performed. From another point of view, the mutual coupling shown or discussed, or direct coupling, or communication connection may be through some interfaces. The indirect coupling, or communication connection among devices or units may be electronic, mechanical, or in other form.

Units described as separate components may be, or may be not physically separated. Components, displayed as units, may be or may be not a physical unit, which may be located in one place, or may be distributed to multiple network units. Some units, or all the units may be selected to implement the objectives of the solution in the embodiment, based on actual requirements.

In addition, in various embodiments of the present disclosure, each functional unit may be integrated into one processing unit. Alternatively, each unit may exist physically alone. Still alternatively, two or more units may be integrated into one unit.

When the functions are implemented in the form of a software functional unit, and sold or used as an independent product, such software functional unit may be stored in a computer readable storage medium. On the basis of such understanding, essence of technical solution in the present disclosure, or a part thereof contributing to the existing technology, or just a part of the technical solution may be demonstrated with a software product. The computer software product is stored in a storage medium, which includes several instructions to enable a computer device (which may be a Personal Computer (PC), a server, or a network device, and so on) to execute all the blocks, or some blocks in a method of each embodiment in the present disclosure. The foregoing storage medium includes a U disk, a mobile hard disk, a Read-Only Memory (ROM), a Random Access Memory (RAM), a disk, or a Compact Disk (CD), or various mediums which may store program codes.

The above descriptions are only embodiments of the present disclosure, but the protection scope of the present disclosure is not limited thereto. For persons having ordinary skill in the art, improvements and changes may be made without departing from the principle of the present disclosure and these improvements and changes should also fall within the protection scope of the present disclosure. Therefore, the protection scope of the present disclosure is subject to the protection scope of the claims.

## Claims

1. An uplink transmission scheduling method applied to a base station, comprising:
sending configuration information of a sub-band to a terminal, the sub-band being a portion of bandwidth in a system bandwidth; and
scheduling the terminal to transmit uplink control information on a full-bandwidth uplink control channel or a sub-band uplink control channel;
wherein the full-bandwidth uplink control channel is an uplink control channel with a bandwidth range less than or equal to the system bandwidth, and the sub-band uplink control channel is an uplink control channel with a bandwidth range less than or equal to a sub-band bandwidth.

2. The method of claim 1, wherein before sending the configuration information of the sub-band, the method further comprises:
dividing the system bandwidth into one or more sub-bands and dividing uplink control channels into the full-bandwidth uplink control channel and the sub-band uplink control channel.

3. The method of claim 1, wherein the configuration information of the sub-band comprises at least one of the following information: a quantity of sub-bands, indexes of sub-bands, frequency ranges of sub-bands and bandwidth sizes of sub-bands.

4. The method of claim 1, wherein before scheduling the terminal to transmit the uplink control information on the full-bandwidth uplink control channel or the sub-band uplink control channel, the method further comprises:
receiving bandwidth capability information sent by the terminal, wherein the bandwidth capability information indicates a bandwidth range in which the terminal operates.

5. The method of claim 4, wherein the step of scheduling the terminal to transmit the uplink control information on the full-bandwidth uplink control channel or the sub-band uplink control channel, comprises:
determining a bandwidth supported by the terminal according to the bandwidth capability information of the terminal;
determining a first control channel on which the terminal transmits the uplink control information, according to the bandwidth supported by the terminal; wherein when the terminal supports operation on the whole system bandwidth, the first control channel is the full-bandwidth uplink control channel or the sub-band uplink control channel; when the terminal only supports operation on the sub-band, the first control channel is the sub-band uplink control channel of the corresponding sub-band; and
sending to the terminal an uplink scheduling message carrying indication information of the first control channel.

6. The method of claim 4, wherein the step of scheduling the terminal to transmit the uplink control information on the full-bandwidth uplink control channel or the sub-band uplink control channel, comprises:
determining a first control channel on which the terminal transmits the uplink control information, according to the bandwidth supported by the terminal; wherein when the terminal supports operation on the whole system bandwidth, the first control channel is the full-bandwidth uplink control channel or the sub-band uplink control channel; when the terminal only supports operation on the sub-band, the first control channel is the sub-band uplink control channel of the corresponding sub-band; and
sending to the terminal an uplink scheduling message implicitly indicating the first control channel;
wherein the uplink scheduling message implicitly indicating the first control channel means that the uplink scheduling message does not carry indication information of the first control channel and the first control channel is a pre-determined uplink control channel corresponding to the bandwidth supported by the terminal.

7. An uplink transmission scheduling method applied to a terminal, comprising:
receiving configuration information of a sub-band sent by a base station, the sub-band being a portion of bandwidth in a system bandwidth;
receiving an uplink scheduling message sent by the base station; wherein the uplink scheduling message schedules the terminal to transmit uplink control information on a full-bandwidth uplink control channel or a sub-band uplink control channel, the full-bandwidth uplink control channel is an uplink control channel with a bandwidth range less than or equal to the system bandwidth, and the sub-band uplink control channel is an uplink control channel with a bandwidth range less than or equal to a sub-band bandwidth; and
transmitting the uplink control information on a corresponding uplink control channel according to the uplink scheduling message.

8. The method of claim 7, wherein the configuration information of the sub-band comprises at least one of the following information: a quantity of sub-bands, indexes of sub-bands, frequency ranges of sub-bands and bandwidth sizes of sub-bands.

9. The method of claim 7, wherein before receiving the uplink scheduling message, the method further comprises:
sending bandwidth capability information of the terminal to the base station;
wherein the bandwidth capability information indicates a bandwidth range in which the terminal operates

10. The method according to claim 9, wherein the uplink scheduling message carries indication information of a first control channel for transmitting the uplink control information;
the step of transmitting the uplink control information on the corresponding uplink control channel according to the uplink scheduling message, comprises:
determining the first control channel according to the indication information in the uplink scheduling message; and
transmitting the uplink control information through the first control channel.

11. The method of claim 9, wherein the uplink scheduling message does not carry indication information of a first control channel for transmitting the uplink control information;
the step of transmitting the uplink control information on the corresponding uplink control channel according to the uplink scheduling message, comprises:
determining an uplink control channel corresponding to the bandwidth supported by the terminal according to a preset correspondence between the bandwidth supported by the terminal and the uplink control channel; and
transmitting the uplink control information through the determined uplink control channel.

12. A base station, comprising:
a first sending unit, configured to send configuration information of a sub-band to a terminal, the sub-band being a portion of bandwidth in a system bandwidth; and
a scheduling unit configured to schedule the terminal to transmit uplink control information on a full-bandwidth uplink control channel or a sub-band uplink control channel;
wherein the full-bandwidth uplink control channel is an uplink control channel with a bandwidth range less than or equal to the system bandwidth, the sub-band uplink control channel is an uplink control channel with a bandwidth range less than or equal to a sub-band bandwidth.

13. The base station of claim 12, further comprising:
a bandwidth dividing unit configured to, before the first sending unit sends the configuration information of the sub-band, divide the system bandwidth into one or more sub-bands and divide uplink control channels into the full-bandwidth uplink control channel and the sub-band uplink control channel.

14. The base station of claim 12, wherein the configuration information of the sub-band comprises at least one of the following information: a quantity of sub-bands, indexes of sub-bands, frequency ranges of sub-bands and bandwidth sizes of sub-bands.

15. The base station of claim 12, further comprising:
a receiving unit configured to, before the scheduling unit schedules the terminal to transmit the uplink control information on the full-bandwidth uplink control channel or the sub-band uplink control channel, receive bandwidth capability information sent by the terminal;
wherein the bandwidth capability information indicates a bandwidth range in which the terminal operates.

16. The base station of claim 15, wherein the scheduling unit comprises:
a first determining subunit configured to determine a bandwidth supported by the terminal according to the bandwidth capability information of the terminal;
a second determining subunit configured to determine a first control channel on which the terminal transmits the uplink control information, according to the bandwidth supported by the terminal; wherein when the terminal supports operation on the whole system bandwidth, the first control channel is the full-bandwidth uplink control channel or the sub-band uplink control channel; when the terminal only supports operation on the sub-band, the first control channel is the sub-band uplink control channel of the corresponding sub-band; and
a second sending sub-unit configured to send to the terminal an uplink scheduling message carrying indication information of the first control channel.

17. The base station of claim 15, wherein the scheduling unit comprises:
a third determining subunit configured to determine a bandwidth supported by the terminal according to the bandwidth capability information of the terminal;
a fourth determining subunit configured to determine a first control channel on which the terminal transmits the uplink control information, according to the bandwidth supported by the terminal; wherein when the terminal supports operation on the whole system bandwidth, the first control channel is the full-bandwidth uplink control channel or the sub-band uplink control channel; when the terminal only supports operation on the sub-band, the first control channel is the sub-band uplink control channel of the corresponding sub-band; and
a third sending sub-unit configured to send to the terminal an uplink scheduling message implicitly indicating the first control channel;
wherein the uplink scheduling message implicitly indicating the first control channel means that the uplink scheduling message does not carry indication information of the first control channel and the first control channel is a pre-determined uplink control channel corresponding to the bandwidth supported by the terminal.

18. A terminal, comprising:
a first receiving unit, configured to receive configuration information of a sub-band sent by a base station, wherein the sub-band is a portion of bandwidth in a system bandwidth;
a second receiving unit, configured to receive an uplink scheduling message which is sent by the base station and schedules the terminal to transmit uplink control information on a full-bandwidth uplink control channel or a sub-band uplink control channel, wherein the full-bandwidth uplink control channel is an uplink control channel with a bandwidth range less than or equal to the system bandwidth, and the sub-band uplink control channel is an uplink control channel with a bandwidth range less than or equal to a sub-band bandwidth; and
an uplink sending unit, configured to transmit the uplink control information on a corresponding uplink control channel according to the uplink scheduling message.

19. The terminal of claim 18, wherein the configuration information of the sub-band includes at least one of the following information: a quantity of sub-bands, indexes of sub-bands, frequency ranges of sub-bands and bandwidth sizes of sub-bands.

20. The terminal of claim 18, further comprising: a second sending unit, configured to, before the second receiving unit receives the uplink scheduling message, send bandwidth capability information of the terminal to the base station; wherein the bandwidth capability information indicates a bandwidth range in which the terminal operates.

21. The terminal of claim 20, wherein the uplink scheduling message carries indication information of a first control channel for sending the uplink control information; wherein the uplink sending unit comprises:
a first determining subunit configured to determine the first control channel according to the indication information in the uplink scheduling message; and
a second sending subunit configured to transmit the uplink control information through the first control channel.

22. The terminal of claim 20, wherein the uplink scheduling message does not carry indication information of a first control channel for sending the uplink control information;
the uplink sending unit comprises:
a second determining subunit configured to determine an uplink control channel corresponding to a bandwidth supported by the terminal according to a preset correspondence between the bandwidth supported by the terminal and the uplink control channel; and
a third sending subunit configured to transmit the uplink control information through the determined uplink control channel.

23. A base station, comprising:
one or more processors;
a memory; and
one or more programs;
wherein the one or more programs are stored in the memory and configured to be executed by the one or more processors; when the one or more programs are executed by the one or more processors, the processor is configured to implement steps of the uplink transmission scheduling method according to any one of claims 1 to 6.

24. A terminal, comprising:
one or more processors;
a memory; and
one or more programs;
wherein the one or more programs are stored in the memory and configured to be executed by the one or more processors when the one or more programs are executed by the one or more processors, the processor is configured to implement steps of the uplink transmission scheduling method according to any one of claims 7 to 11.

25. A non-volatile storage medium comprising a computer program stored on the non-volatile storage medium, wherein when the computer program is executed by a processor, the processor is configured to implement steps of the uplink transmission scheduling method according to any one of claims 1 to 6.

26. A non-volatile storage medium comprising a computer program stored on the non-volatile storage medium, wherein when the computer program is executed by a processor, the processor is configured to implement steps of the uplink transmission scheduling method according to any one of claims 7 to 11.
